(19) Europäisches Patentamt
European Patent Office
Office européen des brevets

(11) Publication number: **0 394 488 A1**

(12) **EUROPEAN PATENT APPLICATION published in accordance with Art. 158(3) EPC**

(21) Application number: **89911606.5**

(22) Date of filing: **20.10.89**

(86) International application number: **PCT/JP89/01077**

(87) International publication number: **WO 90/04574 (03.05.90 90/10)**

(51) Int. Cl.5: **C04B 41/87, C01B 21/064, C23C 16/34, D01F 9/08**

(30) Priority: **21.10.88 JP 264182/88**

(43) Date of publication of application: **31.10.90 Bulletin 90/44**

(84) Designated Contracting States: **DE FR GB**

(71) Applicant: **KAWASAKI STEEL CORPORATION**
**1-1-28 Kitahonmachi-Dori Chuo-ku**
**Kobe-shi Hyogo-ken 651(JP)**

(72) Inventor: **KOSHIDA, Takahisa Main Off.**
**Kawasaki Steel Corp**
**2-3, Uchisaiwai-cho 2-chome Chiyoda-ku**
**Tokyo 100(JP)**

(74) Representative: **Overbury, Richard Douglas et al**
**Haseltine Lake & Co Hazlitt House 28,**
**Southampton Buildings Chancery Lane**
**London WC2A 1AT(GB)**

(54) **COMPOSITE BORON NITRIDE MATERIAL AND PROCESS FOR ITS PRODUCTION.**

(57) A shaped body of graphite is brought into contact with a gaseous mixture of an oxygen-containing boron vapor and a nitrogen-containing gas and heated at a temperature of 1400 to 2200 °C under the above mentioned contacting so that the graphite can be replaced with boron nitride and, based on this principle, a boron nitride-coated graphite firmly coated with boron nitride on a substrate material of graphite and a composite material of boron nitride in which boron nitride and ceramic fibers are firmly bonded together can be obtained. These composite materials of boron nitride are free from exfoliation or separation of boron nitride and the coated composite material so that they can be employed as an inexpensive industrial material utilizing the characteristics of boron nitride in a wide field of, for example, jigs for molten materials, high-temperature electric materials, high-temperature structural materials, heat-resistant materials, heat-insulating materials and the like.

EP 0 394 488 A1

SPECIFICATION

TITLE MODIFIED

# COMPOSITE MATERIAL OF BORON NITRIDE AND METHOD FOR THE PREPARATION THEREOF

## Field of Technology

The present invention relates to a composite material of boron nitride and a method for the preparation thereof. More particularly, the invention relates to a boron nitride-coated graphite of which the oxidation resistance, corrosion resistance and the like of graphite are improved by coating the surface of graphite with boron nitride and a method for the preparation thereof as well as a composite material of ceramic fibers and boron nitride and a method for the preparation thereof.

The application fields of the present invention include various kinds of jigs for calcination, hot-press molds, crucibles for vapor deposition, crucibles for metal melting, jigs, high-temperature electric materials, high-temperature structural materials, heat-insulating materials and the like.

## Background Technology

Boron nitride has excellent lubricity, heat resistance and corrosion resistance so that it is utilized as a jig for molten metal, high-temperature electric insulating material and high-temperature structural material. As an artificial mineral, however, boron nitride is expensive and has limited

applications. On the other hand, graphite is inexpensive and widely employed as industrial products. Accordingly, a technology has been developed for composite-making by coating the surface of graphite with boron nitride. As a consequence of composite-making of different kinds of materials, a problem there is that the coating layer of boron nitride is sometimes subject to exfoliation at high temperatures due to the difference in the thermal expansion. Various methods have been investigated to improve in this regard. Typical and particular examples include following technologies.

(a) A method for preventing exfoliation with a thin film having a film thickness of 1 to 50 μm (Japanese Patent Kokai 59-16969)

(b) A method for preventing exfoliation by forming intermediate layers of $B_4C$ and boron at the interface of boron nitride and graphite to mitigate the difference in the thermal expansion (Japanese Patent Kokai 62-153189, 62-176976 and 62-176981)

(c) A method for the surface treatment of the surface of graphite with plasma and/or a reactive gas (Japanese Patent Kokai 62-297786)

(d) A method for the treatment by a low-temperature chemical vapor deposition method at 1600 °C or below (Japanese Patent Kokai 63-35479)

To discuss the above described conventional methods, the above described method (a) has a defect that the film thickness of boron nitride cannot be increased over 50 μm and the strength of the boundary layer is low due to lack of a

structure capable of giving firm bonding. Though effective against exfoliation, the above described methods (b) and (c) are each a two-step method including the pre-treatment and the treatment for boron nitride formation to increase the production costs. In the above described (d), the strength is low due to the absence of any structure firmly bonding to the boundary layer between boron nitride and graphite as in the method (a).

Each of these methods uses borides such as boron chloride ($BCl_3$), diborane ($B_2H_6$) and the like and has a characteristic that orientation on a definite direction can be obtained on the surface of graphite by the vapor phase synthesis method thereof with $NH_3$. Therefore, they have a defect that exfoliation readily takes place during use in the direction of the c-axis with poor bonding force.

Conventional pyrolytic boron nitride has negative expansion with a thermal expansion coefficient of $-2 \times 10^{-6}/^{o}C$ in the direction parallel to the film thickness while the thermal expansion coefficient of graphite is 2.5 to $5 \times 10^{-6} / ^{o}C$. The difference in the thermal expansion coefficient is large between them so that a shaped body by composite-making of them is subject to exfoliation by repeated heating and cooling cycles. In each of the methods, the cost for the treatment is high due to the use of expensive starting materials, low utilization of the starting materials, long time taken for the reaction, reduced pressure necessitated for the formation of a dense coating film, and so on so that use thereof is limited to special applications.

In the method for coating graphite by using pyrolytic boron nitride, furthermore, the layer of boron nitride is formed on the surface of graphite so that the dimensions and form as desired can be achieved only by a post-working due to the increment by the thickness of the boron nitride layer as compared with the substrate of graphite.

On the other hand, the applicants have disclosed a method in which hexagonal or amorphous boron nitride containing a boron compound and a graphite material are brought into contact and heated in an atmosphere containing nitrogen to form a coating film of boron nitride on the surface of the graphitic material (Japanese Patent Kokai 61-132577). In this method, the boron nitride merely covers the surface of the carbonaceous material and the carbonaceous material cannot be replaces with boron nitride of isomorphism.

Besides, it is a difficult matter to make a physically integrated composite from other ceramic fibers and boron nitride and no such a technology is known in the prior art.

As to the method for the preparation of boron nitride fibers, in the next place, following two methods of (1) and (2) are known in the prior art.

(1) A method in which boron nitride fibers are prepared by shaping boron oxide in a fine fibrous form which is nitrided with $NH_3$ gas (Japanese Patent Publication 60-44274). This method is the typical method currently undertaken in industry but a problem there is that, in addition to the extremely small velocity of the nitriding reaction, shape-keeping of the fibers is difficult because boron oxide has a melting

point at a low temperature of about 500 °C. Therefore, many complicate facilities are required in the industrial plant leading to an increase in the production costs.

(2) A method in which boron nitride is vapor-deposited on the surface of carbon fibers, silicon carbide fibers and the like in a chemical vapor deposition method by the reaction of a gaseous mixture of boron chloride and $NH_3$ gas.

This method is not an industrially possible method and applicable only to special applications in regard of the use of expensive boron chloride as the starting material, in regard of the very slow reaction with $NH_3$ as a vapor-phase reaction, in regard of the necessity of a core material in order to have the vapor-deposition reaction taking place and so on.

Disclosure of the Invention

One of the objects of the present invention is to provide a composite material of boron nitride which is a boron nitride coated graphite by forming, on the surface of graphite, a film of boron nitride having strong adhesive strength not to be subject to exfoliation by heat cycles.

Besides, another object of the present invention is to provide a method for the preparation of the above mentioned boron nitride-coated graphite at low costs as compared with conventional methods by using pyrolytic boron nitride.

A further object of the present invention is to provide a composite material of boron nitride in which ceramic fibers and boron nitride are intimately bonded together as well as a

method for the preparation thereof.

The boron nitride-coated graphite provided according to the present invention is characterized by being formed from a substrate body made from graphite, a boron nitride layer coating the said substrate body and a diffusion layer of a boron compound and graphite interposed between the said substrate body and the boron nitride layer.

The above mentioned diffusion layer is either one of a diffusion layer or boron nitride and graphite, a diffusion layer of boron nitride plus boron carbide and graphite and a diffusion layer of boron nitride plus boron carbide plus boric acid and graphite.

The above mentioned boron nitride-coated graphite is obtained as a boron nitride-coated graphitic material in which boron nitride and graphite are firmly bonded together with an interposed intermediate layer by the method in which graphite is heated at 1400 to 2200 °C under contacting with a gaseous mixture of an oxygen-containing boron vapor and a nitrogen-containing gas to utilize the graphite as a reducing agent with a simultaneously occurring nitriding reaction.

And, the other composite material of boron nitride of the present invention is characterized by consisting of a substrate body formed from ceramic fibers and boron nitride intimately bonded to the said substrate body physically in any desired form.

Such a composite material of boron nitride can be prepared by bringing a mixture body of graphite and ceramic fibers into contact with a gaseous mixture of an oxygen-containing boron vapor and a nitrogen-containing gas and heating the same at a temperature of 1400 to 2200 °C under the above mentioned contacting so as to replace the graphite with boron nitride.

Besides, as an application of this method by the replacement of graphite with boron nitride, a method for the preparation of boron nitride fibers is obtained, which is characterized by bringing carbon fibers into contact with a gaseous mixture of an oxygen-containing boron vapor and a nitrogen-containing gas and heating the same at a temperature of 1400 to 2200 °C under the above mentioned contacting so as to replace the carbon with boron nitride fibers.

Best Mode to Practice the Invention

The present invention is a composite material of boron nitride obtained by replacing graphite with boron nitride as well as a method for the preparation thereof. The basic reactions of the present invention include a reducing reaction of the oxygen-containing boron vapor such as $B_2O_2$, $B_2O_3$ and the like with solid graphite and a reaction for forming boron nitride with the nitrogen in the atmosphere.

The reaction occurs on the surface of graphite so that it proceeds under continuous replacement of the layer of the solid graphite with a layer of boron nitride. In this way, a possibility is given for the preparation of boron nitride in the same configuration as the configuration of the graphite used as the starting material. By this principle, the boron nitride-coated graphite, composite material of boron nitride

by the intimate bonding of ceramic fibers and boron nitride and boron nitride fibers of the present invention can be obtained.

In the boron nitride-coated graphite, a diffusion layer composed of graphite and a boron nitride compound (boron nitride, boron carbide and boric acid) is formed at the boundary layer of graphite and boron nitride in the course of formation of a boron nitride film in the surface layer. This layer is formed with an object to prevent exfoliation of the boron nitride film by the heat cycles of heating and cooling. Namely, the role played is to mitigate the difference in the thermal expansion of boron nitride and graphite by means of the interposed layer. The method for forming this diffusion layer is a reaction of reducing the oxygen-containing boron vapor of $B_2O_2$, $B_2O_3$, and the like with graphite as the substrate material to produce boron nitride with the nitrogen in the atmospheric gas. In this course, a diffusion layer of boron nitride and graphite is formed as an interposed layer. Besides, $B_4C$ is produced by the carbonization reaction with the remaining gas of unreacted $B_2O_3$ and the like or at 2000 $^oC$ or above sometimes to form partly a mixed layer of boron nitride with the same. Incidentally, however, the remaining $B_2O_3$ is converted into boric acid by the moisture in the atmospheric air. This reaction, taking place on the surface of the graphite as the substrate material, proceeds under continuous replacement of the graphite layer with the boron nitride layer. In this way, a possibility is given of the preparation of a shaped body of boron nitride having the same

outer configuration as the outer configuration of the graphite used as the starting material.

In the boron nitride-coated graphite of the present invention, the boron nitride in the outermost layer has a high purity with the content of graphite not exceeding 0.01% by the complete replacement of the graphite as the substrate material with boron nitride. Conventional pyrolytic boron nitride is anisotropic in growth and has a coefficient of thermal expansion of about 2 x $10^{-6}$ / °C in the direction of the a-axis and about 30 x $10^{-6}$/ °C in the direction of the c-axis growing in the direction of the c-axis. A defect as a consequence thereof is that exfoliation of the surface of the pyrolytic boron nitride readily takes place in the c-axis having small strength. The boron nitride layer according to the present invention is formed as a polycrystalline body having no anisotropy in the thermal expansion so that it clearly differs from the pyrolytic boron nitride film.

In the present invention, a diffusion layer is formed as an intermediate layer between boron nitride and graphite to give a state having a layer within which the coefficient of thermal expansion changes continuously so that the adhesion between the layers is enhanced. The strength of the composite material per se is also improved.

According to the present invention, usable graphite includes from general-purpose products to special materials such as high-density isotropic, glassy carbon and the like. The density of the boron nitride film produced depends on the quality of the graphite material used in the present

invention. Namely, use of a dense graphite gives a dense boron nitride film. Accordingly, the graphite must be selected depending on the particular applications. However, those materials liable to produce tar, pitch and gases such as hydrocarbons and the like are not preferable.

The oxygen-containing boron vapor as the boron source can be obtained easily by heating a boric acid such as $B_2O_3$ $B_2O_2$, BNO, HBO and the like or a mixture of boric acid and carbon.

The nitrogen-containing gas employable include $N_2$ gas with lowest costs, $NH_3$ gas, cyarogen gas produced by the reaction of $N_2$ and a carbonaceous material at high temperatures and the like.

The reaction temperature should be as high as possible to be advantageous in order to effect the reaction between graphite and the gaseous mixture of an oxygen-containing boron vapor and a nitrogen-containing gas. The reaction can take place at 1400 °C or higher at the lowest. The upper limit is up to 2200 °C which is the highest temperature at which $B_4C$ is not formed by the reaction of boron nitride and carbon.

The mechanism of the reaction to form boron nitride is a reducing reaction of $B_2O_3$ according to the following reaction equations.

$$B_2O_3 + 3/2C + N_2 \longrightarrow 2BN + 3/2CO_2 \quad \ldots(1)$$

$$B_2O_3 + C + 2NH_3 \longrightarrow 2BN + CO_2 + 3H_2 \quad \ldots(2)$$

As to the pressure in the atmosphere of the reaction, reduced pressures are preferable for the formation of a

uniform and dense film. The boundary between the boron nitride film and graphite in this case was a layer of intermixture of these two ingredients and, differently from a pyrolytic boron nitride, had a polycrystalline structure.

The boron nitride layer formed on the surface is firmly bonded to the graphite of the substrate material but it is rendered porous because the $CO_2$ gas and the like produced by the reactions (1) and (2) are released from inside and the boron-containing gas such as $B_2O_3$ and the like and the nitrogen-containing gas in the atmosphere reach the reaction surface. Some applications may require boron nitride having no pores. In order to produce a boron nitride film to meet these objects, the pores must be filled up by sputtering, ion sputtering, plasma sputtering, chemical vapor deposition method and the like. In the chemical vapor deposition method, for example, the substrate body is heated at a temperature of 1000 to 2000 C and a gaseous mixture composed of a B-containing gas such as $BCl_3$, $B_2H_6$ and the like and ammonia is introduced. When $BCl_3$ is introduced here, for example, boron nitride is produced on the surface of the boron nitride film according to the following equation (3):

$$BCl_3 + NH_3 \longrightarrow BN + 3HCl \qquad ...(3)$$

The boron nitride produced in this manner fills up the pores to form a dense boron nitride film. This method provides a means to form a dense boron nitride film firmly bonded to the substrate material of graphite.

In the preparation of a composite material of boron nitride and other ceramics, the above described reactions (1)

and (2) are utilized to give a possibility of easily converting a mixture of graphite and other ceramic fibers into a composite material of boron nitride and ceramic fibers.

Employable ceramic fibers in the composite material of boron nitride and ceramic fibers include those ceramic fibers having stability in the range of the above mentioned reaction temperature such as SiC, $Al_2O_3$, $ZrO_2$, $Si_3N_4$ and the like and a mixture of carbon fibers, fine graphite particles and the like as graphite with the above mentioned ceramic fibers is prepared in advance. A composite material of ceramic fibers and boron nitride can be easily prepared by subjecting this mixture to the above mentioned boron nitride-forming reaction.

Further, the carbon fibers finer in the form cause faster reaction and carbon fibers can be used in the form of a felt, yarn, cloth, paper, chop, mat or a porous shaped body utilizing fibers because the reaction may readily proceed when the shaped body has a sufficient space.

Example 1.

A shaped body of graphite (20 x 20 x 5) usually used as an electrode material is put on a graphite crucible containing boric acid and gradually heated in an atmosphere of $NH_3$ kept at 200 torr to be subjected to a heat treatment for 2 hours at 1900 $^oC$. After cooling, the shaped body was taken out to find denaturation of the surface to have white color.

This shaped body was cut and examined with an electron

microscope to observe a boron nitride layer having a thickness of 100 to 200 μm and an intermediate layer of an intermixture of boron nitride and graphite in a thickness of 100 to 500 μm.

The boron nitride-coated graphite material after the treatment in this manner was subjected to 100 times repeated handling of pouring of molten iron at 1600 °C and quenching merely to find an oxidized layer of iron of a few μm on the surface of the boron nitride layer without exfoliation of the boron nitride layer and graphite taking place.. And, the boron nitride layer was also remained intact almost without erosion.

Example 2

The same graphite material as used in the Example was put on a graphite crucible containing boric acid and gradually heated in an atmosphere of $N_2$ to be subjected to a heat treatment for 2 hours at 2000 °C. After cooling, the shaped body was taken out to find denaturation of the surface to have white color.

This shaped body was cut and examined with an electron microscope to observe a boron nitride layer having a thickness of 500 to 1000 μm and a diffusion layer of an intermixture of boron nitride and graphite in a thickness of 2000 μm.

Identification of this diffusion layer was undertaken by the X-ray diffractometry to identify boron nitride, boron carbide, boric acid and carbon. This indicated that the diffusion layer was composed of boron nitride, boron carbide,

boric acid and graphite.

Example 3.

A sample coated with boron nitride on graphite by the same method as in Example 1 was heated at 1200 °C and a pyrolytic boron nitride film was formed by a treatment for 2 hours by keeping the pressure inside the furnace at 3 torr and introducing $BCl_3$, $NH_3$ and $H_2$ gas in a proportion 1:1:100 by moles.

After cooling, this material was taken out to find that it had a smooth surface layer and a dense boron nitride layer was formed. The pores of this film were determined with a mercury porosimeter to find that it was a dense film having no pores.

Example 4.

A porous carbonaceous crucible of 10 mm diameter x 20 mm height having a porosity of 70 to 80 % was set on a crucible of 40 mm diameter and 200 mm height containing a mixture of 100 parts of $B_2O_3$ and 100 parts of graphite and subjected to a heat treatment for 2 hours at 2000 °C in an atmosphere of nitrogen. After cooling, the crucible was taken out to find that it was discolored into white. This white product was identified to be boron nitride and the crucible had been converted into a composite shaped body of boron nitride and carbon.

Example 5.

A graphite crucible of 40 mm diameter x 200 mm height was filled with 100 parts of $B_2O_3$ and 100 parts of graphite thoroughly mixed together in a ball mill and a felt of mixed

zirconia fibers and carbon fibers was set on the crucible and heated and kept at 1800 °C for 2 hours in an atmosphere of $N_2$ to give a white felt. This felt was identified by the X-ray diffractometry to find that it had a composite structure of $ZrO_2$ and boron nitride.

Example 6.

A felt made of carbon fibers having a fiber diameter in the range from 13 to 18 μm was put on a crucible containing boric acid and gradually heated in an atmosphere of $NH_3$ kept at 200 torr to be kept for 2 hours at 1900 °C so that a white felt could be prepared. This felt was examined by the X-ray diffractometry to identify a single phase of boron nitride.

Possibility of Industrial Application

The boron nitride-coated graphite, composite material of boron nitride and ceramic fibers and shaped body of boron nitride fibers of the present invention can be used as a jig for calcination, mold for hot press, high-temperature structural material, crucible, heat-insulating material and the like. They can be manufactured by using a simple apparatus and inexpensive starting materials.

CLAIMS

1. A composite material of boron nitride which is a boron nitride-coated graphite comprising a substrate material of graphite, a layer of boron nitride covering the surface of the said substrate material and a diffusion layer of a boron compound and graphite interposed between the said substrate material and the boron nitride layer.

2. The composite material of boron nitride described in Article 1 in which the above mentioned diffusion layer is either one of a diffusion layer of boron nitride and graphite, a diffusion layer of boron nitride, boron carbide and graphite, a diffusion layer of boron nitride boric acid and graphite and a diffusion layer of boron nitride, boron carbide, boric acid and graphite.

3. A method for the preparation of a composite material of boron nitride characterized in that a shaped body of graphite is brought into contact with a gaseous mixture of an oxygen-containing boron vapor and nitrogen-containing gas and heated at a temperature of 1400 to 2200 °C under the above mentioned contacting to be converted into a boron nitride-coated graphite in which boron nitride and carbon are firmly bonded together.

4. A method for the preparation of a composite material of boron nitride characterized in that a shaped body of graphite is brought into contact with a gaseous mixture of an oxygen-containing boron vapor and nitrogen-containing gas and heated at a temperature of 1400 to 2200 $^{o}C$ under the above mentioned contacting to form boron nitride on the surface followed by the formation of a coating layer of boron nitride on the said treated surface.

5. A composite material of boron nitride characteristically comprising a substrate material of ceramic fibers and boron nitride physically in an intimate bonding to the said substrate material in any form.

6. A method for the preparation of a composite material of boron nitride characterized in that an intermixture of graphite and ceramic fibers is brought into contact with a gaseous mixture of an oxygen-containing boron vapor and a nitrogen-containing gas and heated at a temperature of 1400 to 2200 $^{o}C$ under the above mentioned contacting so as to convert the boron nitride and ceramic fibers into a composite material physically in an intimate bonding.

7. A method for the preparation of boron nitride fibers characterized in that carbon fibers are brought into contact with a gaseous mixture of an oxygen-containing boron vapor and a nitrogen-containing gas and heated at a temperature of 1400 to 2200 $^{o}C$ under the above mentioned contacting so as to replace the carbon with boron nitride fibers.

# INTERNATIONAL SEARCH REPORT

International Application No PCT/JP89/01077

**I. CLASSIFICATION OF SUBJECT MATTER** (if several classification symbols apply, indicate all) [6]

According to International Patent Classification (IPC) or to both National Classification and IPC

Int. $Cl^4$ C04B41/87, C01B21/064, C23C16/34, D01F9/08

**II. FIELDS SEARCHED**

Minimum Documentation Searched [7]

| Classification System | Classification Symbols |
|---|---|
| IPC | C04B41/87, C01B21/064 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 60-103091 (Research Development Corporation of Japan), 7 June 1985 (07. 06. 85), & EP, A, 149044 | 1 - 7 |
| A | JP, A, 61-236672 (Denki Kagaku Kogyo Kabushiki Kaisha), 21 October 1986 (21. 10. 86), (Family : none) | 1 - 7 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 15, 1989 (15. 12. 89) | December 25, 1989 (25. 12. 89) |
| **International Searching Authority** | **Signature of Authorized Officer** |
| Japanese Patent Office | |